# EUROPEAN PATENT SPECIFICATION

(11) **EP 2 107 161 B1**
(45) Date of publication and mention of the grant of the patent: **02.11.2011**
(21) Application number: 08425209.7
(22) Date of filing: 31.03.2008
(51) Int. Cl.: E01C 9/08

(54) **Device for preventing trampling and for protecting driveways, particularly on grassy areas, pieces of land and the like**
Vorrichtung zur Vermeidung des Niedertrampelns und zum Schutz von Fahrwegen, insbesondere auf Grasflächen, auf einem Stück Land und Ähnlichem
Dispositif pour empêcher le tassement et pour protéger les voies d'accès, particulièrement sur des zones gazonnées, routes de campagne et similaire

(43) Date of publication of application: 07.10.2009
(73) Proprietor: Tenax S.p.A., 23897 Viganò (Lecco) (IT)
(72) Inventor: Abbiati, Marco, 23891 Barzanò (Lecco) (IT)
(74) Representative: Alagem Modiano, Lara S.

(56) References cited:
- US-A- 5 503 502
- US-A1- 2006 116 040

## Description

The present invention relates to a device for preventing trampling and for protecting driveways, particularly on grassy areas, pieces of land and the like.

As is known, in many cases it is necessary to provide, as a temporary solution or as an alternative to more expensive forms of paving, which are laborious to install, passage areas for earth-moving vehicles, farming vehicles, cars and trucks, low-weight vehicles, and pedestrians.

These situations occur frequently in the case of roadworks or land maintenance work or in case of events such as farming exhibitions and the like, which entail creating temporary driveways across grassy areas such as lawns, hedges, fields, swampy areas, and so forth.

Currently used solutions provide, for the protection of driveways, for the use of panels or boards made of wooden material, which provide a modest contribution as regards protection of the underlying grassy land and as regards the friction obtained between the surface and a tire or a sole of a shoe, especially in humid climate conditions or rainy weather conditions.

The effective duration of this solution is limited over time and often the deterioration of these products prevents reuse.

Other known solutions use panels made of recycled plastic material, which are devised specifically for modular and flexible assembly and are useful also for pedestrians and allow to access work areas on farmland or uncultivated land.

One of the main problems of this known solution is the limited practicality of assembly and transport, due mostly to the unit weight of each panel, which is approximately a few tens of kilograms, and moreover the friction obtained from the surface, which is normally corrugate or studded, decreases considerably if it is covered by mud, sand and/or water.

US-A-5 503 502 discloses a temporary vehicle-bearing surface formed by laying directly on a grassed soil surface a heavy duty plastics geonet having first and second order of filaments having rounded bodies with the features of the preamble of claim 1.

The aim of the invention is to solve the problems described above by providing a device for preventing trampling and for protecting driveways, particularly on grassy areas, pieces of land and the like, which allows to provide a very light structure which is suitable for walkways in private gardens or for small car parks in the open air.

Within this aim, an object of the invention is to provide a device which is durable, sturdy, flexible, reusable, easy to store, lightweight and practical to handle, customizable with various colors and capable of giving adequate protection to the underlying ground.

Another object of the present invention is to provide a device which, thanks to its particular constructive characteristics, is capable of giving the greatest assurances of reliability and safety in use.

Another object of the present invention is to provide a device for preventing trampling and for protecting driveways which can be obtained easily starting from commonly commercially available elements and materials and is also competitive from a merely economic standpoint.

In accordance with the invention, there is provided a device for preventing trampling and for protecting driveways, particularly on grassy areas, pieces of land and the like, as defined in the appended claims.

Further characteristics and advantages of the invention will become better apparent from the description of a preferred but not exclusive embodiment of a device for preventing trampling and for protecting driveways, particularly on grassy areas, pieces of land and the like, illustrated by way of non-limiting example in the accompanying drawings, wherein:

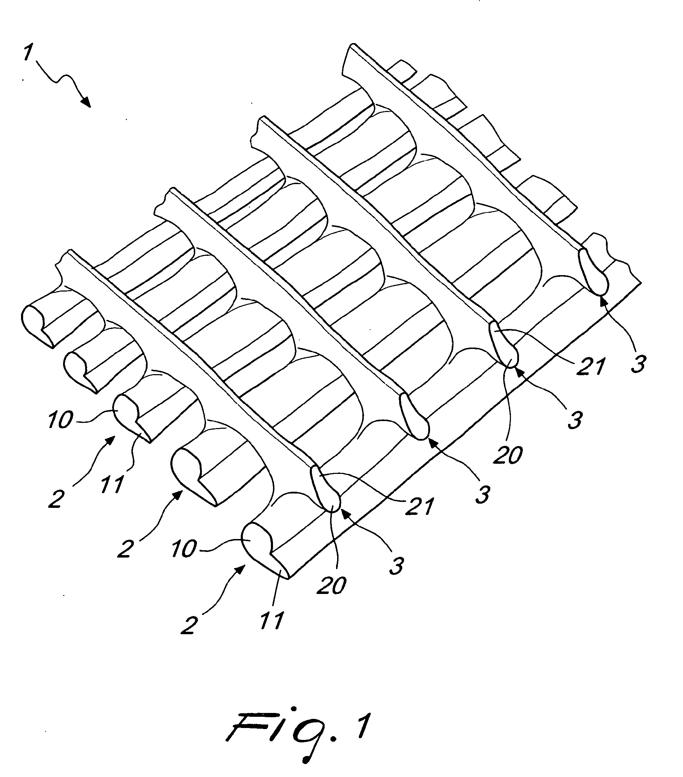

Figure 1 is a perspective view of the device for preventing trampling and for protecting driveways, according to the invention;

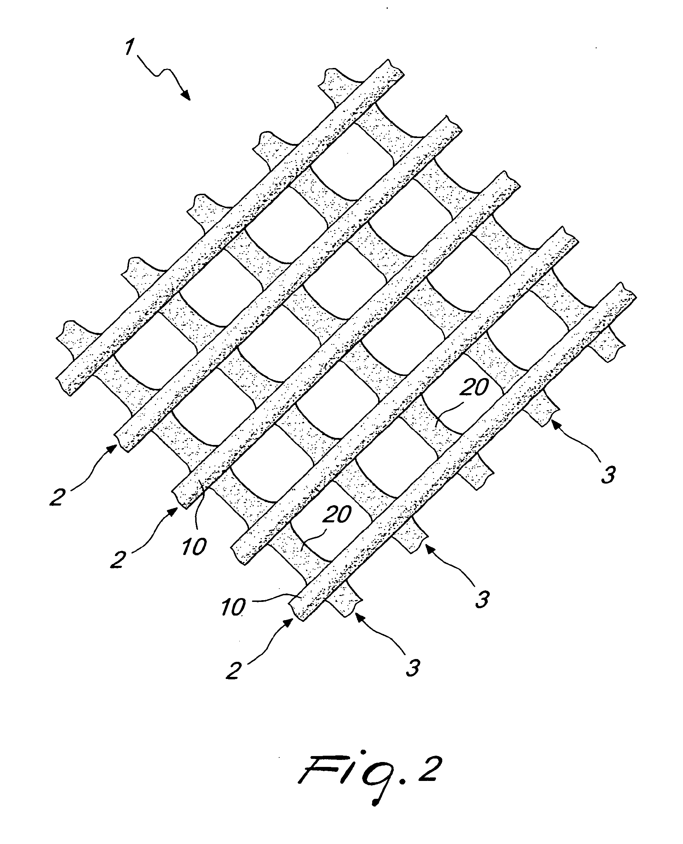

Figure 2 is a plan view of the device, taken from the face with the first order of filaments;

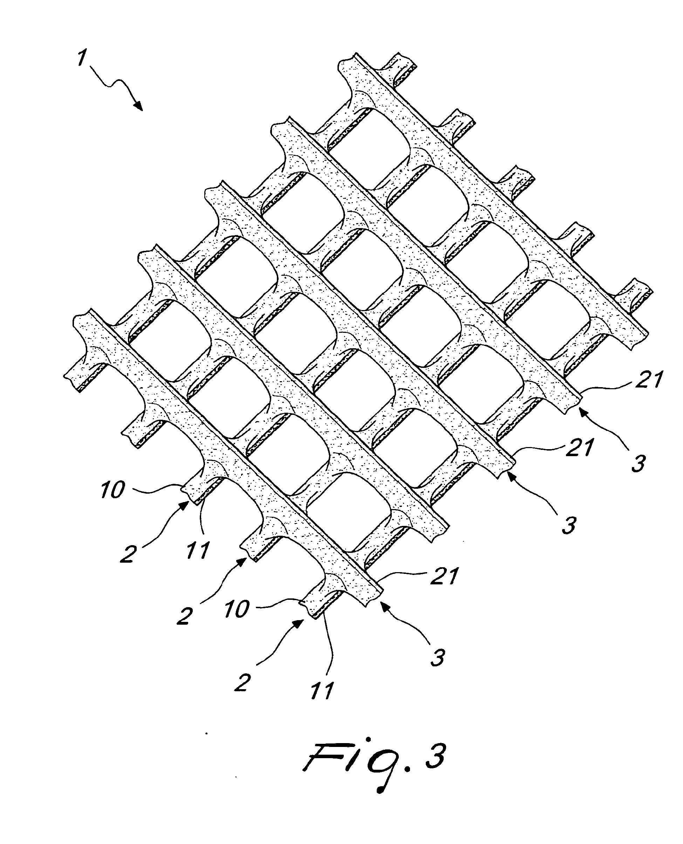

Figure 3 is a plan view of the device, taken from the face with the second order of filaments;

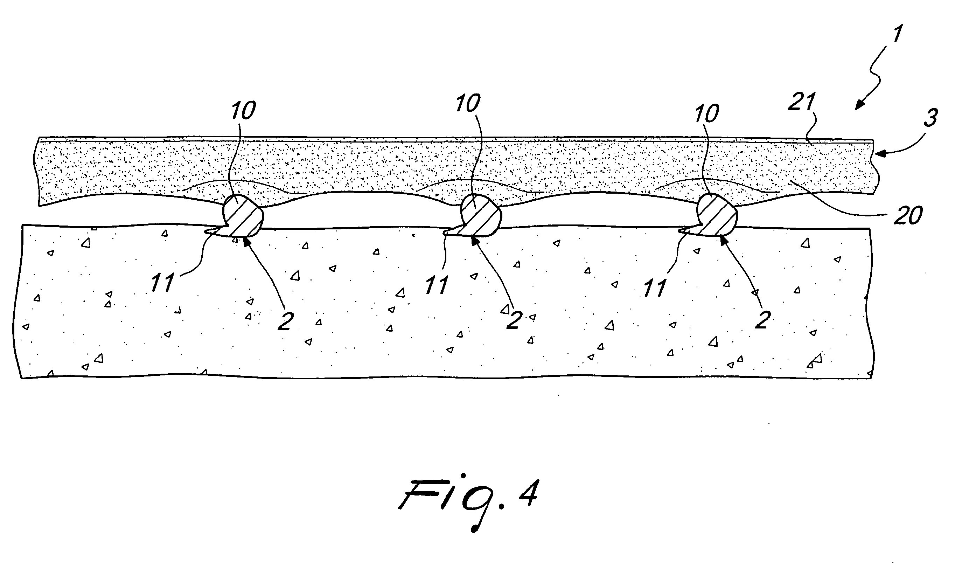

Figure 4 is a sectional view of the device, with the first order of filaments in contact with the ground;

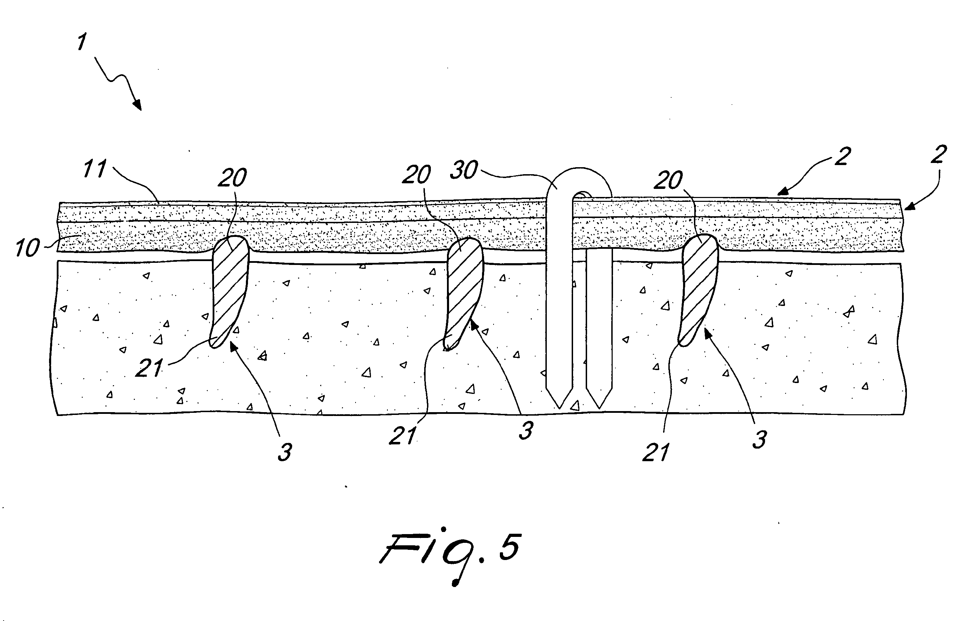

Figure 5 is a sectional view of the device, with the second order of filaments in contact with the ground.

The device for preventing trampling and for protecting driveways, particularly on grassy areas, pieces of land and the like, according to the invention, comprises a panel element, generally designated by the reference numeral 1, which is of the grid-like type with quadrangular meshes preferably diamond-shaped, with a first order of filaments 2 and a second order of filaments 3 which are mutually crossed in order to form a monolithic extruded product, which advantageously is made of a plastic material such as polyethylene, capable of providing low weight and good stiffness, resistance to atmospheric agents and to temperature variations.

The material used is such that the device can be recycled completely if disposed.

It is also possible to use expanding additives or other additives to provide the required mechanical and physical characteristics.

According to a preferred but not exclusive embodiment, the panel element has dimensions of 2.05 meters in length and 1.2 meters in width.

With the proposed dimensions, the panel is easy to handle without having an excessive weight which would require, for example, means suitable for the presence of two or more people for laying.

A panel of this size weighs approximately 10 kg.

According to a preferred embodiment, the first order of filaments and the second order of filaments are different, so as to better meet the operating requirements.

In particular, the first order of filaments 2 has a substantially rounded body 10, from which a flat portion 11 extends which is substantially parallel to the plane of arrangement of the sheet element.

Substantially, the filaments are slightly compressed, or rather oriented with a fold toward a specific direction.

In practice it is possible to assume that the filaments of the first order of filaments, which are mutually parallel, have a substantially L-shaped cross-section, with a sturdier and thicker central part and with the flat portion 11 which tapers gradually.

The second order of filaments has a coupling body, designated by the reference numeral 20, which tapers into an elongated portion 21, which lies substantially at right angles to the plane of arrangement of the panel element.

The two different types of filament allow, in the case of applications for driveways for light vehicles or pedestrians, to obtain the best results by applying the second order of filaments so that it is directed toward the ground: in this manner, the rib of the filaments penetrates more deeply, since it has an elongated and tapering shape and at the same time is very sturdy.

The filaments of the first order of filaments instead create an effective resting base for tires and for the passage of pedestrians, even in the presence of sand, water and mud; such environmental conditions, which are often burdensome, do not compromise general performance even when the climate entails temperatures close to zero.

In the case of more demanding applications, with agricultural and earth-moving vehicles, it is advisable to arrange the panel element so that the first order of filaments is directed toward the ground and the second order with an elongated shape is exposed on the surface, in order to offer maximum grip for passing vehicles.

This type of configuration offers two very important advantages: the first one is a larger ground contact surface offered by the folded filaments, avoiding damage to the ground, for example by biting into the roots of the grassy covering and avoiding excessive penetration and possibly causing water and mud to surface; the second advantage is provided by the folding of the filaments which, by having a precise orientation, creates between the filaments and the ground a "hook-like" effect which ensures optimum grip, in a given direction, in every point of the panel element.

This aspect is very important, since mere staking of the installed panel, which is provided in any case, is not sufficient to ensure perfect adhesion of the panel element in every point of the ground, especially in the case of slight inclines and natural hollows.

By keeping the same orientation during laying, with the fold of the filaments directed toward the base of the incline or the difference in level to be overcome or in the opposite direction with respect to the preferential transit direction of the vehicles, a safe resting base is obtained which engages with the ground in an optimum manner.

In order to make the assembly stable, staking with metallic pins or forks 30 is performed and the several panel elements can be joined by means of ordinary straps.

According to a preferred but non-limiting embodiment, the spacing of the mesh is approximately 45 millimeters in the direction of extrusion of the filaments and 40 millimeters in the perpendicular direction.

The transverse thickness at right angles to the plane of arrangement is approximately 24 millimeters, with a transverse thickness of the filaments of approximately 8 millimeters at the node, i.e., at the intersections between the orders of filaments, and decreases to approximately 3 millimeters at the free ends.

Another important aspect of the invention is constituted by the fact that the grid-like geometry of the device ensures oxygenation, exposure to sunlight of the ground and the passage of rain through the surface of the ground affected by the laying of the product.

This type of device avoids spoiling the grassy covering, by yellowing or, worse still, rotting it until its roots are damaged.

From what has been described above it is evident that the invention achieves the proposed aim and objects, and in particular the fact is stressed that a device for preventing trampling and for protecting driveways is provided which can be laid with great ease and further has highly versatile use.

The invention thus conceived is susceptible of numerous modifications and variations within the scope of the claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device for preventing trampling and for protecting driveways, particularly on grassy areas, pieces of land and the like, comprising a grid-like panel element (1) with quadrangular meshes with a first (2) and a second (3) order of crossed filaments, the filaments (2) of the first order of filaments of said panel element having, in transverse cross-section, a rounded body (10) connected to said second order of filaments (3), **characterized in that** a substantially flat portion (11) extends from said rounded body substantially parallel to the plane of arrangement of said panel element.

2. The device according to the preceding claim, **characterized in that** said first (2) and second (3) orders of filaments form a monolithic extruded product.

3. The device according to one or more of the preceding claims, **characterized in that** the filaments (2) of said first order of filaments have, in transverse cross-section, a substantially L-shaped cross-section.

4. The device according to one or more of the preceding claims, **characterized in that** the filaments (3) of said second order of filaments have, in transverse cross-section, a coupling body (20) which tapers in an elongated portion (21) which lies substantially at right angles to the plane of arrangement of said panel element.

5. The device according to one or more of the preceding claims, **characterized in that** said filaments (2, 3) of said first and second orders form substantially diamond- shaped meshes.

6. The device according to one or more of the preceding claims, **characterized in that** said filaments (2, 3) of said first and second orders can engage selectively the resting surface depending on the type of use.

## Patentansprüche

1. Eine Vorrichtung zur Vermeidung des Trampelns und zum Schutz von Fahrwegen, insbesondere auf Grasflächen, auf einem Stück Land und Ähnlichem, die ein gitterartiges Paneelelement (1) mit viereckigen Maschen mit einer ersten (2) und einer zweiten (3) Anordnung sich kreuzender Fasern umfasst, wobei die Fasern (2) der ersten Anordnung von Fasern des Paneelelements im transversalen Querschnitt einen gerundeten Körper (10) haben, der mit der zweiten Anordnung von Fasern (3) verbunden ist, **dadurch gekennzeichnet, dass** ein im Wesentlichen flacher Abschnitt (11) sich von dem gerundeten Körper im Wesentlichen parallel zur Anordnungsebene des Paneelelements erstreckt.

2. Die Vorrichtung gemäß dem obigen Anspruch, **dadurch gekennzeichnet, dass** die erste (2) und die zweite (3) Anordnung von Fasern ein monolithisches gespritztes Produkt bilden.

3. Die Vorrichtung gemäß einem oder mehreren der obigen Ansprüche, **dadurch gekennzeichnet, dass** die Fasern (2) der ersten Anordnung von Fasern im transversalen Querschnitt einen im Wesentlichen L-förmigen Querschnitt haben.

4. Die Vorrichtung gemäß einem oder mehreren der obigen Ansprüche, **dadurch gekennzeichnet, dass** die Fasern (3) der zweiten Anordnung von Fasern im transversalen Querschnitt einen Kopplungskörper (20) haben, der in einem verlängerten Abschnitt (21) spitz zuläuft, welcher im Wesentlichen im rechten Winkel zur Anordnungsebene des Paneelelements liegt.

5. Die Vorrichtung gemäß einem oder mehreren der obigen Ansprüche, **dadurch gekennzeichnet, dass** die Fasern (2, 3) der ersten und der zweiten Anordnung im Wesentlichen rautenförmige Maschen bilden.

6. Die Vorrichtung gemäß einem oder mehreren der obigen Anspruche, **dadurch gekennzeichnet, dass** die Fasern (2, 3) der ersten und der zweiten Anordnung je nach Art der Anwendung selektiv in die Auflageoberfläche eingreifen können.

## Revendications

1. Dispositif pour prévenir le tassement et protéger les allées, en particulier sur les zones herbeuses, les terrains et équivalents, comprenant un élément de panneau semblable à une grille (1) avec des mailles quadrangulaires comportant un premier (2) et un second (3) ordre de filaments croisés, les filaments (2) du premier ordre de filaments dudit élément de panneau ayant, en section transversale, un corps arrondi (10) relié audit second ordre de filaments (3), **caractérisé en ce qu'**une portion sensiblement plate (11) s'étend depuis ledit corps arrondi de manière sensiblement parallèle au plan d'agencement dudit élément de panneau.

2. Dispositif selon la revendication précédente, **caractérisé en ce que** lesdits premier (2) et second (3) ordres de filaments forment un produit extrudé monolithique.

3. Dispositif selon une ou plusieurs des revendications précédentes, **caractérisé en ce que** les filaments (2) dudit premier ordre de filaments ont, en section transversale, une section sensiblement en forme de L.

4. Dispositif selon une ou plusieurs des revendications précédentes, **caractérisé en ce que** les filaments (3) dudit second ordre de filaments ont, en section transversale, un corps de couplage (20) qui diminue progressivement dans une portion allongée (21) située sensiblement à angles droits pair rapport au plan d'agencement dudit élément de panneau.

5. Dispositif selon une ou plusieurs des revendications précédentes, **caractérisé en ce que** lesdits filaments (2, 3) desdits premier et second ordres forment des mailles sensiblement en forme de losange.

6. Dispositif selon une ou plusieurs des revendications précédentes, **caractérisé en ce que** lesdits filaments (2, 3) desdits premier et second ordres peuvent entrer sélectivement en prise avec la surface d'appui selon le type d'utilisation.
